# FASCICULE DE BREVET EUROPEEN

(11) **EP 0 684 739 B1**
(45) Date de publication et mention de la délivrance du brevet: **18.08.1999**
(21) Numéro de dépôt: 95410050.9
(22) Date de dépôt: 23.05.1995
(51) Int. Cl.: H04N 7/50

(54) **Circuit de détermination du coefficient de quantification dans une chaîne de compression d'image**
Schaltung zur Bestimmung der Quantisierungskoeffizienten in einer Anordnung zur Bildkompression
Circuit to determine quantization coefficients in an image compression structure

(30) Priorité: 27.05.1994 FR 9406725
(43) Date de publication de la demande: 29.11.1995
(73) Titulaire: STMicroelectronics S.A., 94250 Gentilly (FR)
(72) Inventeur: Bolton, Martin, F-38210 Tullins (FR)
(74) Mandataire: de Beaumont, Michel

(56) Documents cités:
- EP-A- 0 424 060
- EP-A- 0 469 648
- EP-A- 0 478 230
- EP-A- 0 493 136
- EP-A- 0 500 077
- EP-A- 0 514 663
- EP-A- 0 540 961
- US-A- 5 144 424
- US-A- 5 283 646

## Description

La présente invention concerne un circuit de quantification utilisé dans les chaînes de compression d'image selon les normes MPEG ou H.261, et plus particulièrement un circuit permettant de déterminer les coefficients de quantification à utiliser.

Selon les normes MPEG et H.261, chaque image est traitée par carrés de 16x16 pixels. A chaque carré correspond un "macrobloc" constitué de quatre blocs de 8x8 pixels de luminance et de deux blocs de 8x8 pixels de chrominance. Les termes "pixel de luminance" et "pixel de chrominance" sont utilisés par souci de simplification (un pixel est en réalité une combinaison de pixels de luminance et de chrominance).

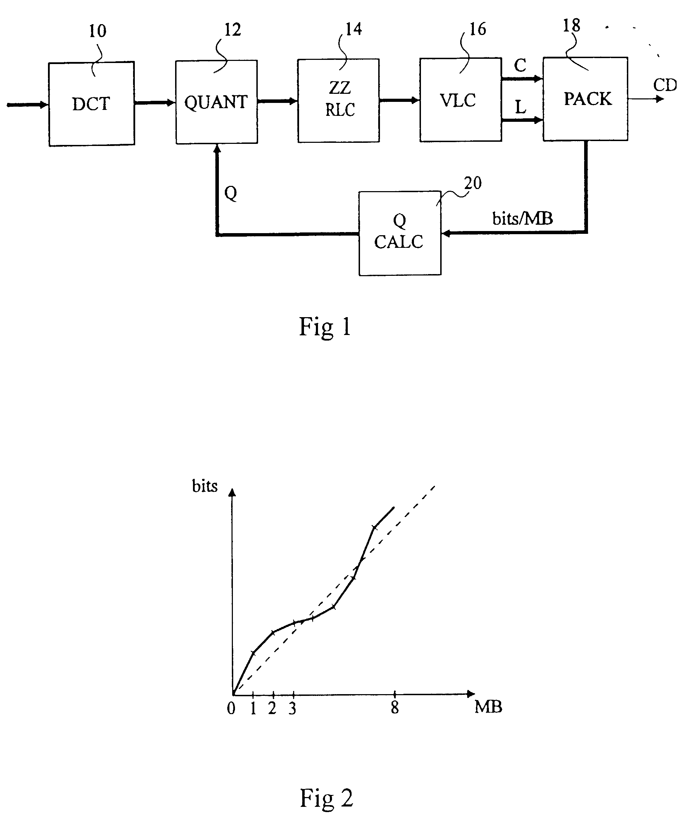

La figure 1 représente partiellement une chaîne de compression d'image selon les normes MPEG ou H.261. Cette chaîne comprend un circuit de transformée cosinus discrète (DCT) 10 qui traite les macroblocs bloc par bloc. La transformée cosinus discrète fournit pour chaque bloc une matrice qui a la particularité d'avoir des coefficients tendant rapidement vers 0 au fur et à mesure qu'il s'éloignent du coin supérieur gauche de la matrice.

Un circuit de quantification 12 traite les coefficients fournis par le circuit DCT 10. La quantification consiste essentiellement à effectuer une division par un coefficient de quantification positif Q. Elle a pour but d'annuler les coefficients proches de O des matrices fournies par le circuit DCT.

La sortie du circuit de quantification 12 est fournie à un circuit 14 effectuant un balayage zigzag (ZZ) et un codage de chaînes de zéros (RLC). Le balayage zigzag consiste à balayer les matrices quantifiées de manière à fournir des longues suites de coefficients nuls consécutifs entre deux coefficients non nuls. Le codage de chaînes de zéros consiste à fournir des paires de nombres dont le premier représente un nombre de coefficients nuls consécutifs et le deuxième le premier coefficient non nul suivant.

Un circuit de codage à longueur variable (VLC) 16 reçoit les paires fournies par le circuit 14. Le codage à longueur variable consiste à remplacer les paires fréquentes par un code court et les paires peu fréquentes par un code long. Chaque code est fourni par le circuit VLC sur deux bus C et L. Le bus C fournit le code sur un certain nombre de lignes généralement inférieur au nombre de lignes du bus. Le bus L fournit la longueur du code, c'est-à-dire indique le nombre de lignes effectivement utilisées par le code sur le bus C.

Un circuit de compactage 18 a pour but de juxtaposer les codes fournis par le circuit VLC en éliminant les bits inutilisés du bus C. Les codes ainsi juxtaposés constituent les données comprimées CD.

Un problème important dans la compression est le choix du coefficient de quantification Q. Les normes MPEG et H.261 autorisent la modification du coefficient Q à chaque macrobloc mais ne préconisent pas de règle pour le choisir.

Il est classique de choisir la valeur du coefficient Q en fonction du nombre de bits que fournit la compression de chaque macrobloc. Comme cela est représenté, le circuit de compactage fournit à un circuit 20 de calcul des coefficients Q le nombre de bits de chaque macrobloc comprimé. Le nombre de bits par macrobloc est obtenu, par exemple, en accumulant les longueurs L des codes fournis par le circuit VLC pour chaque macrobloc.

La figure 2 illustre une méthode classique de détermination du coefficient de quantification Q, que l'on appelle ci-après méthode par objectif. Cette méthode consiste à fixer un objectif, ou consigne, indiquant le nombre de bits à atteindre pour chaque macrobloc comprimé, et à ajuster le coefficient de quantification à chaque macrobloc pour que le nombre effectif de bits tende vers l'objectif.

La figure 2 représente en trait plein l'évolution effective du nombre de bits d'une image comprimée en fonction du nombre de macroblocs MB traités. En fixant un objectif pour les macroblocs, on détermine une évolution linéaire théorique, représentée en pointillés.

Avant le traitement du premier macrobloc de l'image, le coefficient de quantification Q est initialisé. Le premier macrobloc est traité avec ce coefficient de quantification Q et le nombre de bits croît avec une certaine pente.

Dès que le premier macrobloc est traité, on compare son nombre de bits à l'objectif et le coefficient de quantification est modifié proportionnellement à l'écart. Dans l'exemple représenté, le nombre de bits est supérieur à l'objectif et le coefficient de quantification est augmenté.

En pratique, en raison des retards introduits dans la chaîne de traitement et dans la chaîne de contre-réaction (circuit 20), la valeur d'un coefficient de quantification calculée à la fin d'un premier macrobloc est établie trop tard pour être appliquée au deuxième macrobloc ; elle n'est appliquée qu'au troisième macrobloc. Ce retard a peu de conséquences car des macroblocs consécutifs sont souvent similaires.

En procédant ainsi, l'évolution effective du nombre de bits d'une image oscille autour de l'évolution théorique, la pente de l'évolution variant à chaque macrobloc de manière à tendre vers l'évolution théorique fixée par l'objectif.

Cette méthode par objectif présente l'avantage, lorsque l'objectif est fixé pour toutes les images, d'être particulièrement facile à mettre en oeuvre de manière câblée. Toutefois, la qualité de la compression varie alors significativement d'une image à l'autre.

Pour éviter cela, certains utilisateurs souhaitent modifier l'objectif d'une image à l'autre selon des critères recueillis lors du traitement d'images précédentes. La méthode est alors particulièrement complexe à mettre en oeuvre de manière câblée et sa mise en oeuvre logicielle serait trop lente pour effectuer une compression en temps réel.

Le fait d'affecter un objectif constant sur une image fournit une qualité de compression variable sur l'image due aux différents niveaux de complexité que l'on peut trouver dans l'image.

Les documents US-A-5 283 646 et EP-A-0 478 230 décrivent plus en détail des méthodes de calcul de coefficients de quantification.

Un objet de la présente invention est de prévoir un circuit de détermination de coefficient de quantification de structure particulièrement simple et qui permette néanmoins une détermination particulièrement rapide des coefficients de quantification selon des méthodes complexes.

Un autre objet de la présente invention est de prévoir un tel circuit permettant de mettre en oeuvre des méthodes par objectif variable sur une même image.

Un autre objet de la présente invention est de prévoir un tel circuit qui permette, avec une même structure, de mettre en oeuvre un grand nombre de méthodes différentes de détermination du coefficient de quantification.

Ces objets sont atteints grâce à un circuit qui met en oeuvre de manière câblée des fonctions simples qui sont effectuées à cadence élevée, et qui met en oeuvre de manière logicielle des fonctions complexes mais qui sont effectuées à faible cadence. En particulier, le circuit est prévu pour mettre en oeuvre de manière câblée la méthode par objectif constant, l'objectif étant stocké dans un registre dont le contenu peut être modifié par un microprocesseur qui exécute un programme destiné à déterminer un objectif variable d'une image à une autre, et même à l'intérieur d'une même image.

La présente invention vise plus spécifiquement un circuit de détermination d'un coefficient de quantification à fournir à un circuit de quantification incorporé dans une chaîne de compression d'image par macroblocs, comprenant un premier compteur comptant le nombre de bits de chaque macrobloc comprimé par la chaîne de compression ; un premier accumulateur intégrant, à partir d'une valeur initiale, la différence entre chaque nombre fourni par le premier compteur et un objectif, et fournissant une valeur correspondant au coefficient de quantification ; un microprocesseur pour fournir au premier accumulateur une valeur initiale au moins à chaque image et un objectif à chaque N macroblocs, où N est un nombre inférieur au nombre de macroblocs contenus dans une image ; et des moyens accessibles par le microprocesseur, fournissant des paramètres caractérisant le traitement de compression en cours pour que le microprocesseur détermine l'objectif et la valeur initiale à fournir au premier accumulateur.

Selon un mode de réalisation de la présente invention, les moyens susmentionnés comprennent un deuxième compteur comptant le nombre de bits dans chaque groupe de N macroblocs comprimés ; un deuxième accumulateur intégrant les coefficients de quantification utilisés pour chaque groupe de N macroblocs ; et un circuit de commande générant une interruption du microprocesseur à la fin de chaque groupe de N macroblocs, de manière que le microprocesseur lise les contenus du deuxième compteur et du deuxième accumulateur et calcule, en fonction de ces contenus, un objectif et une valeur initiale fournis au premier accumulateur.

Selon un mode de réalisation de la présente invention, le circuit comprend un multiplieur recevant le contenu du premier accumulateur et un gain contenu dans un registre accessible par le microprocesseur, la sortie du multiplieur fournissant le coefficient de quantification.

Selon un mode de réalisation de la présente invention, le circuit comprend un troisième compteur comptant le nombre de bits dans chaque bloc des macroblocs comprimés, les nombres fournis par ce troisième compteur étant accessibles par le microprocesseur de manière que le circuit puisse avoir un mode à deux passes de compression de chaque image, la première passe nécessitant que le microprocesseur rassemble les nombres de bits par bloc pour déterminer des gains à fournir audit multiplieur lors de la deuxième passe.

Ces objets, caractéristiques et avantages ainsi que d'autres de la présente invention seront exposés plus en détail dans la description suivante de modes de réalisation particuliers faite à titre non-limitatif à l'aide des figures jointes parmi lesquelles :
la figure 1, précédemment décrite, représente partiellement une chaîne de compression d'image selon les normes MPEG et H.261 ;
la figure 2, précédemment décrite, représente un graphique de variation du nombre de bits d'une image en cours de compression ;
la figure 3 représente la chaîne de traitement de la figure 1 incorporant un mode de réalisation de circuit selon l'invention de détermination d'un coefficient de quantification à utiliser dans la chaîne ; et
la figure 4 représente une évolution du nombre de bits d'une image en cours de compression par le circuit de la figure 3.

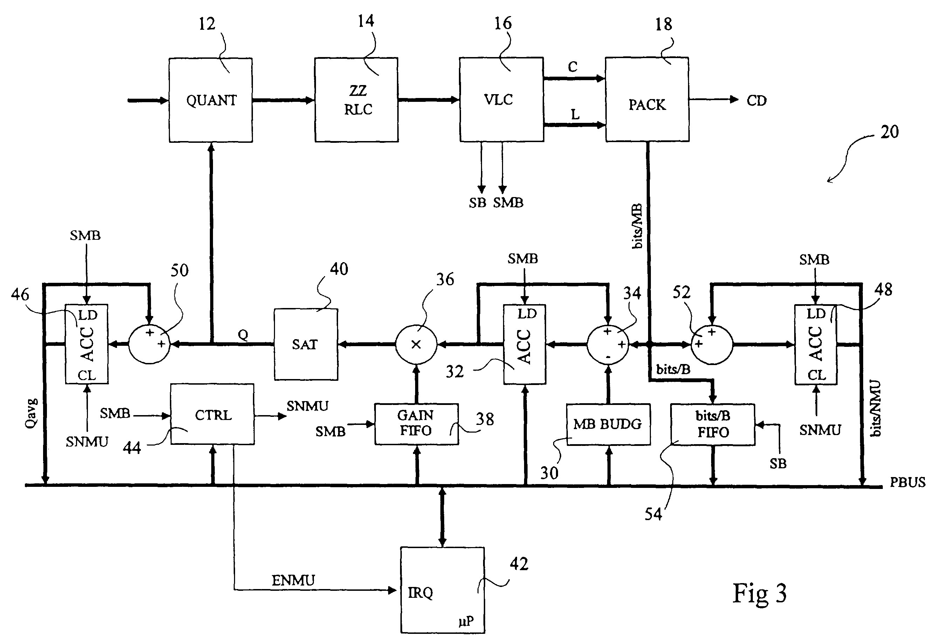

A la figure 3, on retrouve des mêmes éléments qu'à la figure 1, désignés par des mêmes références. L'invention concerne le circuit 20 destiné à calculer les coefficients de quantification Q à fournir au circuit de quantification 12. La figure 3 représente un mode de réalisation selon l'invention de ce circuit 20.

Selon l'invention, le circuit de calcul 20 est prévu pour mettre en oeuvre de manière câblée des fonctions simples qui doivent être exécutées fréquemment, par exemple à chaque macrobloc, et qui sont en outre communes à la plupart des méthodes de détermination des coefficients de quantification. Ces fonctions sont en particulier celles permettant de déterminer le coefficient de quantification Q à partir d'un objectif fixe. Par ailleurs, selon un aspect de l'invention, cet objectif peut être réajusté à chaque image ou même à chaque fraction d'image, par un microprocesseur qui met en oeuvre des fonctions complexes mais qui doivent être effectuées peu fréquemment, par exemple à chaque image ou fraction d'image. Ces fonctions complexes sont, par exemple, la détermination de l'objectif d'une image à traiter à partir de caractéristiques recueillies lors du traitement de l'image précédente. Ces fonctions, programmées par un utilisateur, peuvent être quelconques tout en conservant une structure unique du circuit de calcul 20.

Le circuit de calcul 20 comprend un registre 30 dans lequel est stocké un objectif de bits par macrobloc. La différence entre le nombre de bits par macrobloc fourni par le circuit de compactage 18 et l'objectif 30 est accumulée dans un registre 32 à chaque traitement d'un macrobloc. Pour cela, le registre 32 stocke, à la cadence d'un signal de synchronisation de macrobloc SMB, la sortie d'un additionneur 34 qui reçoit la sortie du registre 32, le nombre de bits par macrobloc fourni par le circuit de compactage 18 et, sur une entrée de soustraction, l'objectif 30. Le contenu du registre 32 est remis à une valeur initiale régulièrement, par exemple à chaque début du traitement d'une image.

Le signal de synchronisation SMB est, par exemple, fourni par le circuit VLC 16 à chaque début du codage à longueur variable d'un macrobloc.

Le nombre de bits par macrobloc est obtenu, par exemple, en accumulant dans un registre, non représenté, les longueurs de code fournis par le circuit VLC sur le bus L, ce registre étant remis à zéro à chaque macrobloc par le signal SMB.

Le coefficient de quantification Q à fournir au circuit de quantification 12 constitue la sortie d'un multiplieur 36 qui multiplie la sortie du registre 32 par un gain stocké dans un registre 38. Les normes MPEG et H.261 imposant une limite supérieure au coefficient de quantification Q, la sortie du multiplieur 36 est limitée à cette valeur maximale par un circuit de saturation 40.

La chaîne de contre-réaction qui vient d'être décrite met en oeuvre la méthode par objectif avec un objectif constant sur toutes les images traitées.

Par ailleurs, le registre d'objectif 30 est relié à un microprocesseur 42 par un bus PBUS, ce qui permet au microprocesseur 42 de modifier l'objectif. La présente invention prévoit de laisser le choix à un utilisateur de modifier l'objectif par unités de N macroblocs, où N est un nombre choisi par l'utilisateur compris entre 1 et le nombre de macroblocs d'une image. Plus le nombre N est faible, plus la qualité de compression des images sera améliorée par la homogénéisation de la qualité sur chaque image, mais plus le microprocesseur 42 sera sollicité. Ainsi, l'utilisateur peut effectuer un compromis entre la qualité souhaitée et la puissance du microprocesseur.

Le nombre N est par exemple stocké dans un registre d'un circuit de commande 44, accessible par le microprocesseur 42 qui écrit le nombre N dans le registre à chaque mise sous tension. Le circuit de commande 44 reçoit le signal de synchronisation de macrobloc SMB, à partir duquel il génère un signal de synchronisation d'unité de N macroblocs SNMU et un signal de fin d'unité de N macroblocs ENMU. Le signal ENMU est activé avant la fin de chaque unité de N macroblocs, par exemple au début du dernier macrobloc de l'unité, et son activation constitue une requête d'interruption IRQ du microprocesseur 42. Le microprocesseur 42 traite chacune de ces interruptions en calculant un nouvel objectif et écrivant ce dernier dans le registre 30.

Pour calculer l'objectif, des méthodes classiques requièrent des caractéristiques telles que le coefficient de quantification moyen Qavg utilisé pour les macroblocs de l'image précédente ainsi que le nombre de bits fournis lors de la compression de l'image précédente.

Avec le circuit selon l'invention, le coefficient de quantification moyen Qavg et le nombre de bits correspondant sont fournis à chaque unité de N macroblocs et non à chaque image. On peut ainsi envisager d'utiliser ces caractéristiques pour déterminer l'objectif de l'unité suivante, ou bien de stocker ces caractéristiques sur une image pour déterminer les objectifs des unités de l'image suivante.

A chaque interruption du microprocesseur 42, un coefficient de quantification moyen Qavg se trouve dans un registre 46 et le nombre de bits de l'unité correspondante se trouve dans un registre 48.

Le registre 46 accumule à chaque macrobloc le coefficient de quantification Q utilisé. Pour cela, le registre 46 est validé par le signal de synchronisation de macroblocs SMB et reçoit la sortie d'un additionneur 50 qui somme le contenu du registre 46 et les coefficients de quantification Q.

Le registre 48 accumule, à chaque macrobloc, le nombre de bits par macrobloc fourni par le circuit de compactage 18. Pour cela, le registre 48 est validé par le signal de synchronisation de macrobloc SMB et reçoit la sortie d'un additionneur 52 qui somme le contenu du registre 48 et le nombre de bits par macrobloc.

Les registres 46 et 48 sont remis à zéro par le signal de synchronisation d'unité de macroblocs SNMU.

Les caractéristiques stockées dans les registres 46 et 48 sont accessibles par le microprocesseur 42 qui les lit à chaque interruption et calcule en fonction de ces caractéristiques, ou de celles stockées lors du traitement d'une image précédente, le nouvel objectif à écrire dans le registre 30.

Il existe de nombreuses manières de calculer un objectif à partir du coefficient de quantification moyen Qavg et du nombre de bits correspondant, qu'il n'est pas utile de décrire ici.

Le fait de pouvoir modifier un objectif à chaque fraction d'image (à chaque unité de N macroblocs), permet d'attribuer des objectifs élevés à des zones d'image complexes et des objectifs faibles à des zones d'image peu complexes afin de rendre homogène la qualité de compression sur une image.

Comme on l'a précédemment mentionné, chaque interruption du microprocesseur 42 survient avant la fin du traitement d'une unité de N macroblocs, par exemple au début du dernier macrobloc de l'unité. On opère ainsi pour que le microprocesseur 42 ait le temps de mettre à jour l'objectif dans le registre 30 avant que ne commence le traitement de l'unité suivante. Dans certains cas, le microprocesseur peut ne pas avoir le temps de mettre à jour le contenu du registre 30. Pour éviter les problèmes qui découleraient de ceci, le microprocesseur 42 valide un bit dans un registre du circuit de commande 44 lorsqu'il a modifié le contenu du registre 30. Si ce bit n'est pas validé avant le début de l'unité suivante, le traitement est suspendu jusqu'à la validation de ce bit.

Avec cette façon de procéder, le coefficient de quantification moyen Qavg et le nombre de bits correspondant sont en fait calculés sur N-1 macroblocs pour chaque unité de N macroblocs. Ceci a une très faible incidence sur le calcul de l'objectif car deux macroblocs consécutifs, notamment les deux derniers macroblocs d'une unité, sont le plus souvent similaires.

Par contre, lorsque le nombre N est choisi égal à 1, le circuit est tel que le coefficient de quantification moyen Qavg (dans ce cas le coefficient de quantification Q) et le nombre de bits trouvés pour un premier macrobloc servent à calculer l'objectif attribué au troisième macrobloc.

Comme on l'a représenté, les registres 32 et 38 sont reliés au bus PBUS, ce qui permet au microprocesseur 42, à chaque interruption, de modifier le gain de la chaîne de contre-réaction dans le registre 38 et de fixer la valeur initiale d'accumulation dans le registre 32.

Le circuit de calcul du coefficient de quantification selon l'invention permet une mise en oeuvre particulièrement facile et efficace d'une méthode connue de calcul du coefficient de quantification Q par traitement en deux passes de chaque image.

Le traitement en deux passes d'une image consiste, dans une première passe à compter le nombre de bits de chaque bloc de l'image en utilisant un coefficient de quantification fixe. On détermine ensuite un coefficient de correction du coefficient de quantification pour chaque macrobloc selon diverses méthodes connues possibles qu'il n'est pas utile de décrire ici. Dans la deuxième passe, le coefficient de quantification est déterminé normalement par la chaîne de contre-réaction, mais il est modifié à chaque macrobloc par le coefficient de correction correspondant trouvé lors de la première passe.

Pour effectuer un traitement en deux passes, le microprocesseur 42 valide un bit correspondant d'un registre du circuit de commande 44. Lors de la première passe, le contenu du registre 32, correspondant au coefficient de quantification, n'est pas modifié (on empêche, par exemple, le signal SMB de valider ce registre). Les nombres de bits par bloc sont fournis à une mémoire 54 de type premier entré - premier sorti (FIFO) validée par un signal de synchronisation de bloc SB (fourni, par exemple, par le circuit VLC). Les nombres de bits par bloc sont fournis, par exemple, en accumulant dans un registre, non représenté, les longueurs de code fournis par le circuit VLC sur le bus L, ce registre étant remis à zéro à chaque bloc par le signal SB. La capacité de la mémoire FIFO 54 est d'au moins 6N nombres. Ainsi, à chaque interruption du microprocesseur 42, ce dernier vide la mémoire FIFO 54 et détermine en fonction de son contenu les corrections à apporter aux N coefficients de quantification correspondants lors de la deuxième passe.

Lors de la deuxième passe, le coefficient de quantification Q est déterminé normalement par le circuit, mais le microprocesseur 42 modifie le gain contenu dans le registre 38 à chaque macrobloc. Dans ce but, de préférence, le registre 38 est une mémoire FIFO dont la capacité est d'au moins N gains. Ainsi, le microprocesseur 42 remplit la mémoire FIFO 38 d'une nouvelle série de N gains à chaque interruption. Les gains sont fournis au multiplieur 36 au rythme du signal de synchronisation de macrobloc SMB.

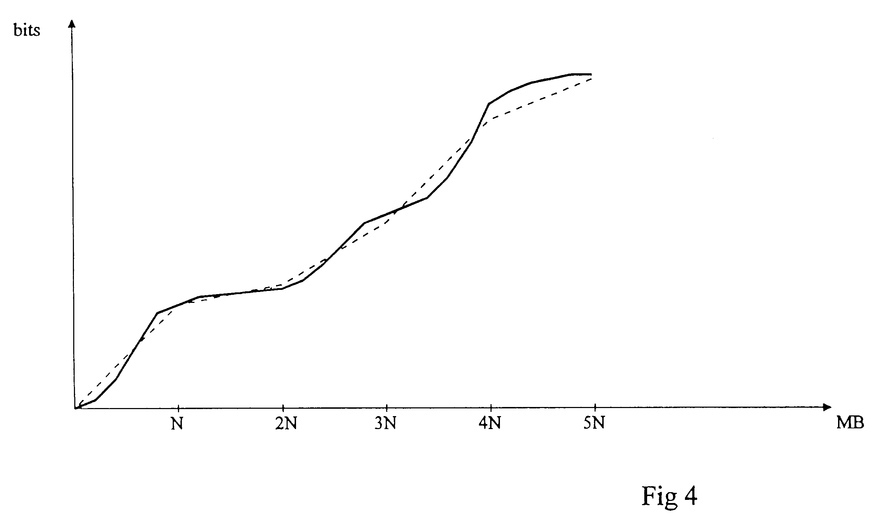

La figure 4 représente un exemple d'allure d'évolution du nombre de bits en fonction du nombre de macroblocs traités, obtenue à l'aide d'un circuit de calcul selon l'invention. Cette figure est similaire à la figure 2 dans laquelle on a représenté en pointillés l'évolution idéale déterminée par les objectifs et en trait plein l'évolution réelle.

La figure 4 diffère de la figure 2 par le fait que l'évolution idéale, en pointillés, varie par paliers, à chaque N macroblocs, correspondant aux modifications d'objectif.

## Revendications

1. Circuit d'assistance à la détermination d'un coefficient de quantification (Q) à fournir à un circuit de quantification (12) incorporé dans une chaîne de compression d'image par macroblocs, comprenant :
- un premier compteur (18) comptant le nombre de bits de chaque macrobloc comprimé par la chaîne de compression ;
- un premier accumulateur (32, 34) intégrant, à partir d'une valeur initiale, la différence entre chaque nombre fourni par le premier compteur et un objectif (30), et fournissant une valeur correspondant au coefficient de quantification ;
- microprocesseur (42) pour fournir au premier accumulateur une valeur initiale au moins à chaque image et un objectif à chaque N macroblocs, où N est un nombre choisi inférieur au nombre de macroblocs contenus dans une image ;
- un deuxième compteur (48, 52) comptant le nombre de bits dans chaque groupe de N macroblocs comprimés ;
- un deuxième accumulateur (46, 50) intégrant les coefficients de quantification utilisés pour chaque groupe de N macroblocs ;
- le deuxième compteur et le deuxième accumulateur étant accessibles par le microprocesseur pour que le microprocesseur détermine l'objectif et la valeur initiale à fournir au premier accumulateur.

2. Circuit selon la revendication 1, caractérisé en ce qu'il comprend un circuit de commande (44) générant une interruption (IRQ) du microprocesseur (42) à la fin de chaque groupe de N macroblocs, de manière que le microprocesseur lise les contenus du deuxième compteur et du deuxième accumulateur et calcule, en fonction de ces contenus, un objectif et une valeur initiale fournis au premier accumulateur.

3. Circuit selon la revendication 1, caractérisé en ce qu'il comprend un multiplieur (36) recevant le contenu du premier accumulateur (32, 34) et un gain contenu dans un registre (38) accessible par le microprocesseur, la sortie du multiplieur fournissant le coefficient de quantification (Q).

4. Circuit selon la revendication 3, caractérisé en ce qu'il comprend un troisième compteur (18) comptant le nombre de bits dans chaque bloc des macroblocs comprimés, les nombres fournis par ce troisième compteur étant accessibles par le microprocesseur (42) de manière que le circuit puisse avoir un mode à deux passes de compression de chaque image, la première passe nécessitant que le microprocesseur rassemble les nombres de bits par bloc pour déterminer des gains à fournir audit multiplieur (36) lors de la deuxième passe.

## Patentansprüche

1. Hilfsschaltung zur Unterstützung der Bildung eines Quantisierungskoeffizienten (Q) zur Zufuhr an eine Quantisierungsschaltung, die Teil einer Kette zur Bildkompression mit Makroblöcken ist, wobei die Schaltung umfaßt:
- einen ersten Zähler (18) zur Zählung der jeweiligen Bitanzahl jedes in der Kompressionskette komprimierten Makroblocks;
- einen ersten Akkumulator (32,34), welcher ausgehend von einem Anfangswert den Unterschied zwischen jeweils jeder von dem ersten Zähler gelieferten Zahl und einem Zielwert bzw. einer Zielvorgabe (30) integriert und einen dem Quantisierungskoeffizienten entsprechenden Wert liefert;
- einen Mikroprozessor (42), welcher dem ersten Akkumulator einen Anfangswert wenigstens bei jedem Bild und einen Zielwert wenigstens bei allen N Makroblöcken zuführt, wobei N kleiner als die Anzahl der in einem Bild enthaltenen Makroblöcke gewählt ist;
- einen zweiten Zähler (48,52) zur Zählung der jeweiligen Bitanzahl in jeder Gruppe von N komprimierten Makroblöcken;
- einen zweiten Akkumulator (46,50), welcher die jeweils in jeder Gruppe von N Makroblöcken verwendeten Quantisierungskoeffizienten integriert;
- wobei der Mikroprozessor Zugriff auf den zweiten Zähler und den zweiten Akkumulator hat, derart daß der Mikoroprozessor den jeweils dem ersten Akkumulator zuzuführenden Zielwert und Anfangswert bestimmt.

2. Schaltung nach Anspruch 1, dadurch gekennzeichnet, daß sie eine Steuerschaltung (44) aufweist, welche jeweils am Ende jeder Gruppe von N Makroblöcken eine Unterbrechung (IRQ) des Mikroprozessors (42) generiert, derart daß der Mikroprozessor die Inhalte des zweiten Zählers und des zweiten Akkumulators liest und in Abhängigkeit von diesen Inhalten einen dem ersten Akkumulator zugeführten Zielwert (Zielvorgabe) und Anfangswert berechnet.

3. Schaltung nach Anspruch 1, dadurch gekennzeichnet, daß die Schaltung einen Multiplizierer (36) aufweist, der den Inhalt des ersten Akkumulators (32,34) und eine in einem für den Mikroprozessor zugänglichen Register (38) enthaltene Verstärkung zugeführt erhält, wobei die Ausgangsgröße des Multiplizierers den Quantisierungskoeffizienten liefert.

4. Schaltung nach Anspruch 3, dadurch gekennzeichnet, daß die Schaltung einen dritten Zähler (18) zur Zählung der jeweiligen Bitzahlen in jedem Block der komprimierten Makroblöcke aufweist, wobei der Mikroprozessor (42) Zugriff auf die von diesem dritten Zähler gelieferten Zahlenwerte hat, derart daß die Schaltung einen Betriebsmodus mit zwei Kompressionsschritten bzw. -durchgängen pro Bild aufweisen kann, wobei in dem ersten Schritt bzw. Durchgang der Mikroprozessor die Bitzahlen je Block kumulieren muß, um die dem Multiplizierer (36) während des zweiten Schritts bzw. Durchgangs zuzuführenden Verstärkungen zu bestimmen.

## Claims

1. A circuit for assisting the determination of a quantization coefficient (Q) to be provided to a quantizer (12) incorporated in a picture macroblock compression chain, including:
- a first counter (18) for counting the number of bits of each macroblock compressed by the compression chain;
- a first accumulator (32, 34) integrating, from an initial value, the difference between each number provided by the first counter and a target (30), and providing a value corresponding to the quantization coefficient;
- a microprocessor (42) for providing the first accumulator with an initial value, at least at each picture, and a target at each N macroblocks, where N is a number lower than the number of macroblocks contained in a picture;
- a second counter (48, 52) for counting the number of bits in each group of N compressed macroblocks;
- a second accumulator (46, 50) integrating the quantization coefficients used for each group of N macroblocks;
the second counter and the second accumulator being accessible by the microprocessor, so that the microprocessor determines the target and the initial value to be provided to the first accumulator.

2. The circuit of claim 1, including a control circuit (44) generating an interruption (IRQ) of the microprocessor (42) at the end of each group of N macroblocks, so that the microprocessor reads the contents of the second counter and of the second accumulator and calculates, as a function of said contents, a target and an initial value provided to the first accumulator.

3. The circuit of claim 1, including a multiplier (36) receiving the content of the first accumulator (32, 34) and a gain contained in a register (38) accessible by the microprocessor, the output of the multiplier providing the quantization coefficient (Q).

4. The circuit of claim 3, including a third counter (18) counting the number of bits in each block of the compressed macroblocks, the numbers provided by said third counter being accessible by the microprocessor (42) so that the circuit operates in a two-step compression mode for each picture, and wherein, during the first step, the microprocessor must cumulate the number of bits per block to determine gains to be provided to said multiplier (36) during the second step.
